# EUROPEAN PATENT SPECIFICATION

(11) **EP 2 871 357 B1**
(45) Date of publication and mention of the grant of the patent: **25.05.2016**
(21) Application number: 14188173.0
(22) Date of filing: 08.10.2014
(51) Int. Cl.: F03D 1/00

(54) **WIND TURBINE POWER GENERATING APPARATUS AND EQUIPMENT CONVEYING METHOD FOR THE SAME**
WIND TURBINE UND VERFAHREN ZUM TRANSPORT VON KOMPONENTEN DERSELBEN
ÉOLIENNE ET PROCÉDÉ DE TRANSPORT DE SES COMPOSANTS

(30) Priority: 09.10.2013 JP 2013211983; 07.10.2014 JP 2014206293
(43) Date of publication of application: 13.05.2015
(73) Proprietor: MITSUBISHI HEAVY INDUSTRIES, LTD., Tokyo 108-8215 (JP)
(72) Inventor: Numajiri, Tomohiro, Tokyo, 108-8215 (JP); Fujioka, Yoshihiro, Yokohama-Shi, Kanagawa, 231-8715 (JP)
(74) Representative: Intès, Didier Gérard André

(56) References cited:
- EP-A1- 1 291 521
- WO-A1-2012/079579
- JP-A- 2009 528 470

## Description

### TECHNICAL FIELD

The present disclosure relates to a device transferring method for a wind turbine power generating apparatus and a wind turbine power generating apparatus.

### BACKGROUND

In recent years, a wind turbine power generating apparatus using wind force has become widely used in consideration of preservation of the global environment. A wind turbine power generating apparatus commonly includes a rotor having a hub to which a plurality of blades are attached, and a main shaft which rotates with the rotor. The rotor rotates by receiving wind at the blades, and the rotation energy is inputted into a generator via the main shaft, thereby generating electric power.

The rotor and the main shaft are normally supported on a nacelle to be freely rotatable. The nacelle is disposed on the upper end of a tower installed standing upright on the ground or on the ocean. A variety of devices are disposed in the interior space of the nacelle. When transferring the devices disposed in the interior space of the nacelle or tools used for maintenance of such devices during construction, maintenance, dismantlement or the like of a wind turbine power generating apparatus, a lifting mechanism such as a crane or a winch is commonly used to lift or lower the devices or the tools between the lower part of the tower and the nacelle interior space disposed at a high level. For example, Patent Documents 1 to 4 disclose techniques of lifting and lowering devices using a lifting mechanism attached to a nacelle.

### Citation List

### Patent Literature

Patent Document 1: EP1101934A
Patent Document 2: EP1677007A
Patent Document 3: EP1291521
Patent Document 4: WO2012/079579

### SUMMARY

A wind turbine power generating apparatus has increased in size for the purpose of improving power generation efficiency, thus also increasing the load applied on a tower. Thus, in order to reduce the weight of a nacelle which is to be disposed on the upper end of the tower, it is desirable to decrease the size of the nacelle. However, as it is necessary to accommodate a variety of devices in a limited space of the nacelle interior space, reducing the size of a nacelle may cause the devices to be disposed close to each other in the nacelle interior space. As a result, in a case where the transfer-target device is in a state of being surrounded by other devices during construction, maintenance, dismantlement or the like of the wind turbine power generating apparatus, there could be a problem in that the transferring work requires more steps for transferring the transfer-target device between the nacelle interior space and the nacelle exterior space.

There is no disclosure in Patent Documents 1 and 2 in this regard on techniques of improving the transferring work of the devices disposed in the nacelle interior space.

In view of the above issue, an object of at least some embodiments of the present invention is to provide a device transferring method for a wind turbine power generating apparatus and a wind turbine power generating apparatus which are capable of improving efficiency of the transferring work of devices.

A device transferring method for a wind turbine power generating apparatus according to at least one embodiment of the present invention is for transferring devices disposed inside a nacelle of the wind turbine power generating apparatus including at least one supporting frame configured to support a first device when being positioned in a first space over a first opening formed on a bottom face of the nacelle. The device transferring method includes: a device suspending step of suspending the first device on a lifting mechanism; a frame moving step of moving the at least one supporting frame between the first space and a second space which is apart from the first space by moving the at least one supporting frame at least in a horizontal direction; a cover opening step of opening a cover of the first opening; and, after the cover opening step, a first device lifting/lowering step of lifting or lowering the first device between a nacelle interior space and a nacelle exterior space via the first space and the first opening by the lifting mechanism in a state where the at least one supporting frame is removed to the second space.

According to the above device transferring method for a wind turbine power generating apparatus, when the first device to be transferred is positioned in the vertical line of the first opening in a state where the load is supported by the lifting mechanism, the cover is opened and also the supporting frame is removed to the second space which is apart from the first space over the first opening by being moved at least in the horizontal direction. As a result, there is no obstacle in the path for transferring the first device, which makes it possible to suspend and lift or lower the first device between the nacelle interior space and the nacelle exterior space via the first opening only by moving the first device in the vertical direction. Accordingly, it is possible to carry out simplified and efficient transferring work when transferring a device disposed in the nacelle interior space between the nacelle interior space and the nacelle exterior space during construction, maintenance, dismantlement or the like of the wind turbine power generating apparatus.

Further, when moving the supporting frame from the first space to the second space by moving the supporting frame at least in the horizontal direction, the first device supported by the supporting frame may be slightly lifted and spaced from the supporting frame. As a result, when suspending and lowering the first device disposed in the nacelle interior space to the nacelle exterior space, it is possible to move the supporting frame out from under the first device only by lifting the first device slightly.

In some embodiments, in the frame moving step, the at least one supporting frame is moved between the first space and the second space in a horizontal plane by being slid in a horizontal direction or being rotated around an axis which extends along a vertical direction.

As a result, it is possible to move the supporting frame in a horizontal plane in a limited space around the first device, which makes it possible to remove the first device from the first space to the second space, and to return the removed first device to the first space from the second space.

In some embodiments, two or more of the supporting frames are each mounted to a nacelle base plate connected to a tower of the wind turbine power generating apparatus or to a nacelle frame coupled to the nacelle base plate. Also, the two or more supporting frames are configured to support the first device in cooperation with each other when being positioned in the first space. Further, in the first device lifting/lowering step, the first device is lifted or lowered via the first space and the first opening in a state where the two or more supporting frames are removed to the second space.

It becomes possible to support the first device stably with two or more supporting frames supporting the first device as described above.

In some embodiments, the device transferring method for a wind turbine power generating apparatus further includes a disconnecting step of disconnecting connection of a piping or an electric cable between the first device and a second device which is apart from the first device. Also, in the first device lifting/lowering step, the first device is transferred in a state where the connection of the piping or the electric cable is disconnected.

As a result, even in a case where the first device is connected to the second device through the piping or electric cables, it is possible to lift or lower the first device since the first device is configured to be transferred in a state where the connection of the piping or the electric cables is disconnected.

In some embodiments, the at least one supporting frame is configured to support the first device along with a device baseplate for placing the first device or a casing for accommodating the first device. Also, in the first device lifting/lowering step, the first device is lifted or lowered along with the device baseplate or the casing.

Since the first device is lifted or lowered along with the device baseplate or the casing, at least a part of the first device is protected by the device baseplate or the casing. Thus, it is possible to make it unlikely for the first device to receive shock due to the transfer. Also, if the first device is lifted or lowered separately from the device baseplate or the casing, it would be necessary to remove the first device from the device baseplate or the casing and then move the device baseplate or the casing in the horizontal direction away from the first space. Thus, lifting or lowering the first device along with the device baseplate or the casing makes it possible to reduce the number of steps in the work, thereby further improving the efficiency of the transferring work.

In some embodiments, in the first device lifting/lowering step, the first device is lifted or lowered along with an oil pan disposed under the first device.

Lifting and lowering the first device along with the oil pan as described above makes it possible to receive oil by the oil pan if oil leaks from the first device during the transferring work of the first device. Further, by lifting and lowering the first device along with the oil pan, it is no longer necessary to remove the oil pan, which makes it possible to further improve the efficiency of the transferring work. Also, it is also possible to prevent leakage of the oil to the outside using the oil pan even if the oil leaks from the first device being transferred.

In some embodiments, the device transferring method for a wind turbine power generating apparatus further includes a component moving step of moving a component which is disposed under the first device in the first space between the first space and a third space which is apart from the first space by moving the component at least in the horizontal direction. Also, in the first device lifting/lowering step, the first device is lifted or lowered via the first space and the first opening in a state where the component is removed to the third space.

In a case where a component is disposed under the first device in the first space, the component may be positioned in the path for transferring the first device and may interfere with the lifting and lowering movement of the first device. Thus, the component disposed under the first device is removed to the third space before lifting or lowering the first device, so that there is no obstacle in the path for transferring the first device. As a result, it is possible to suspend and lift or lower the first device efficiently.

In some embodiments, the first device is a hydraulic motor which is included in a hydraulic transmission configured to transmit rotation of a rotor of the wind turbine power generating apparatus to a generator.

In some embodiments, the device transferring method for a wind turbine power generating apparatus includes: a third device moving step of moving a third device which is apart from the first device between the first space and a space which is apart from the first space, by moving the third device at least in the horizontal direction; and after the cover opening step, a third-device lifting/lowering step of lifting or lowering the third device between the nacelle interior space and the nacelle exterior space via the first space and the first opening in a state where the at least one supporting frame is removed to the second space and the first device is in the nacelle exterior space.

As a result, it is possible to transfer the third device, which is apart from the first device, between the nacelle interior space and the nacelle exterior space via the first opening.

In one embodiment, the third device is a generator disposed in the nacelle.

In some embodiments, the lifting mechanism includes a suspending part configured to suspend the first device, and a reel for lifting or lowering the first device suspended on the suspending part. Also, the device transferring method further includes a lifting-mechanism assembling step before the device suspending step. This lifting-mechanism assembling step includes transferring the suspending part divided into a plurality of sections into the nacelle via a second opening through which the tower interior space communicates with the nacelle interior space, and assembling the suspending part.

As described above, the suspending part is configured to be dividable into a plurality of sections and disposed in the tower interior space so that each divided section of the suspending part is transferred from the tower interior space to the nacelle interior space to be assembled together when transferring the first device. As a result, it is possible to install the suspending part in the nacelle interior space when needed, which enables effective use of the space in the nacelle interior space. Also, it is possible to transfer each section of the suspending part between the nacelle interior space and the tower interior space without passing through the outside of the wind turbine power generating apparatus, which enables attachment or detachment of the suspending part even in bad weather.

In one embodiment, in the lifting-mechanism assembling step, a wire is pulled in from the reel disposed in the tower of the wind turbine power generating apparatus to the suspending part disposed in the nacelle via the second opening.

Providing a reel in the tower interior space as described above makes it possible to reduce the weight of the nacelle and to reduce the size of the nacelle interior space.

A wind turbine power generating apparatus according to the present invention includes: a nacelle; a first device disposed in the nacelle; an attachment part to which a lifting mechanism is attachable, the lifting mechanism being configured to lift and lower the first device in a state where the first device is being suspended; a first opening formed on a bottom face of the nacelle and configured to be openable and closable by a cover; and at least one supporting frame configured to support the first device on a nacelle side in a state where the at least one supporting frame is positioned in a first space over the first opening. Also, the at least one supporting frame is configured to be capable of being removed to a second space which is apart from the first space by being moved at least in a horizontal direction from the first space so as not to interfere with the first device configured to be lifted or lowered between a nacelle interior space and a nacelle exterior space by the lifting mechanism via the first space and the first opening in a state where the cover is open.

According to the above wind turbine power generating apparatus, the supporting frame which supports the first device at the nacelle side is configured such that the supporting frame can be removed from the first space to the second space which is apart from the first space, by being moved at least in the horizontal direction so as not to interfere with the first device being lifted or lowered between the nacelle interior space and the nacelle exterior space. Thus, by moving the supporting frame at least in the horizontal direction, it is possible to clear an obstacle from the path for transferring the first device, which makes it possible to easily suspend and lift or lower the first device between the nacelle interior space and the nacelle exterior space via the first opening only by moving the first device in the vertical direction. As a result, it is possible to carry out facilitated and efficient transferring work when transferring a device disposed in the nacelle interior space between the nacelle interior space and the nacelle exterior space during construction, maintenance, dismantlement or the like of a wind turbine power generating apparatus.

In some embodiments, the at least one supporting frame is mounted to a nacelle base plate connected to a tower of the wind turbine power generating apparatus or to a nacelle frame coupled to the nacelle base plate, and configured to be movable between the first space and the second space in a horizontal plane by being slid in the horizontal direction or rotated around an axis which extends in the vertical direction.

As a result, it becomes possible to move the supporting frame in a limited space around the first device.

According to some embodiments of the present invention, it is possible to suspend and lift or lower a first device which is to be transferred between a nacelle interior space and a nacelle exterior space via the first opening without interfering with supporting frames for supporting the first device on a nacelle side, and thus to carry out facilitated and efficient transferring work during construction, maintenance, dismantlement or the like of a wind turbine power generating apparatus.

### BRIEF DESCRIPTION OF DRAWINGS

FIG. 1 is a schematic diagram of an overall configuration of a wind turbine power generating apparatus according to one embodiment.
FIG. 2 is a perspective view of an exemplary configuration of a wind turbine power generating apparatus according to one embodiment.
FIG. 3A is a perspective view of an exemplary configuration (when a device is disposed thereon) of supporting frames according to one embodiment. FIG. 3B is a perspective view of an exemplary configuration (when removed) of the supporting frames according to one embodiment.
FIG. 4 is a diagram illustrating a device transferring method according to one embodiment.
FIG. 5A is a diagram illustrating a disconnection step of the device transferring method. FIG. 5B is another diagram illustrating the disconnection step of the device transferring method.
FIG. 6A is a diagram illustrating a third device moving step of the device transferring method. FIG. 6B is another diagram illustrating the third device moving step of the device transferring method.
FIG. 7 is a planar view of an exemplary configuration of a device lifting mechanism according to one embodiment.
FIG. 8 is a side view of the device lifting mechanism seen from the direction A of FIG. 7.
FIGs. 9A to 9D are diagrams illustrating an installation method of the device lifting mechanism. FIG. 9A illustrates a state where each section is being transferred into a nacelle. FIG. 9B illustrates a state where each section is being assembled. FIG. 9C illustrates a state where a wire is being pulled in. FIG. 9D illustrates a state where the device lifting mechanism is installed.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

A wind turbine power generating apparatus and a device lifting mechanism for the same according to embodiments of the present invention will be described below.

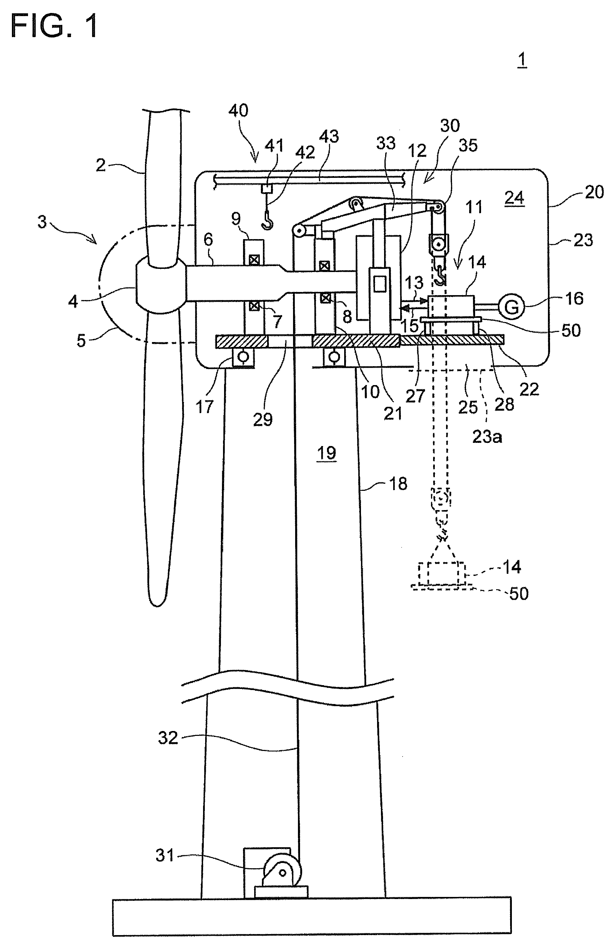

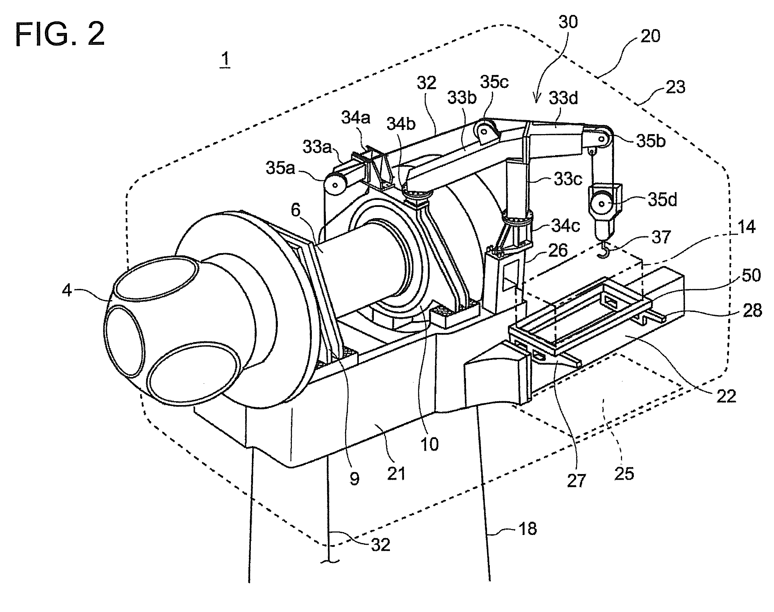

FIG. 1 is a schematic diagram of an overall configuration of a wind turbine power generating apparatus according to one embodiment. FIG. 2 is a perspective view of an exemplary configuration of a wind turbine power generating apparatus according to one embodiment.

As illustrated in FIGs. 1 and 2, the wind turbine power generating apparatus 1 includes a rotor 3 having at least one blade 2 and a hub 4, a main shaft 6 coupled to the hub 4, a generator 16 which generates electric power, a drive train 11 which transmits rotation energy of the main shaft 6 to the generator 16, a nacelle 20 which accommodates a variety of devices including the main shaft 6, and a tower 18 to which the nacelle 20 is mounted.

In some embodiments, the drive train 11 includes a hydraulic pump 12 coupled to the main shaft 6 and a hydraulic motor 14 connected to the hydraulic pump 12 through a high pressure oil line 13 and a low pressure oil line 15. The hydraulic pump 12 is supported on a nacelle base plate 21 via a torque arm (pump supporting part) 26. The torque arm 26 is configured to absorb vibration or torque of the hydraulic pump 12. Also, the hydraulic pump 12 is driven by the main shaft 6 to increase pressure of working oil, thereby producing high-pressure working oil (pressurized oil). The outlet of the hydraulic pump 12 is connected to the inlet of the hydraulic motor 14 through the high pressure oil line 13. The hydraulic motor 14 is supported on a nacelle frame 22 via supporting frames 27, 28 (see FIG. 2). Here, the specific configuration of the supporting frames 27, 28 will be described below.

In the above drive train 11, the pressurized oil produced in the hydraulic pump 12 is supplied to the hydraulic motor 14 through the high pressure oil line 13, and this pressurized oil drives the hydraulic motor 14. The working oil having performed work at the hydraulic motor 14 again returns to the hydraulic pump 12 through the low pressure oil line 15 disposed between the outlet of the hydraulic motor 14 and the inlet of the hydraulic pump 12. Also, the output shaft of the hydraulic motor 14 is connected to the input shaft of the generator 16, so that rotation of the hydraulic motor 14 is inputted to the generator 16. The hydraulic pump 12, the hydraulic motor 14, and the generator 16 are not limited in number, and may be at least one.

Further, while FIG. 1 illustrates a case where a hydraulic transmission is used, the embodiment is not limited to this, and may employ a drive train configured to transmit torque of the main shaft 6 to the generator 16 via a gearbox. Also, the main shaft 6 may be directly connected to the generator 16 without the drive train 11.

In some embodiments, the nacelle 20 includes the nacelle base plate 21, a nacelle frame 22 mounted to the nacelle base plate 21, and a nacelle cover 23 disposed so as to define a nacelle interior space 24. In the present description, the space inside the nacelle cover 23 is referred to as a nacelle interior space 24, the space being partitioned from the exterior space by the nacelle cover 23. Further, in the present description, a side closer to the hub 4 in the axial direction of the main shaft 6 in the nacelle interior space 24 is referred to as a front side, while a side further from the hub 4 therein is referred to as a rear side. The nacelle frame 22 is connected to an end portion on the rear side of the nacelle base plate 21 and disposed so as to extend along the axial direction of the main shaft 6. Two nacelle frames 22 may be provided parallel with each other across the main shaft 6. Although the present embodiment illustrates only a part of the nacelle frame 22, the other omitted part of the nacelle frame may be also disposed so as to support the nacelle cover 23 or a plate for placing a variety of devices in the nacelle 20.

The tower 18 is disposed standing upright on a base installed on the land or on the ocean. In the present description, the interior of the outer wall of the tower 18 is referred to as a tower interior space 19. On the upper end of the tower 18, the nacelle base plate 21 may be mounted via a yaw rotation bearing 17. The main shaft 6 may be mounted on the nacelle 20 via a pair of main bearings including a front bearing 7 and a rear bearing 8. The front bearing 7 is positioned on the side closer to the hub 4, while the rear bearing 8 is positioned on the side further from the hub 4. The housing 9 of the front bearing 7 and the housing 10 of the rear bearing 8 may be each supported by the nacelle base plate 21.

A first opening 25 is disposed on the bottom face of the nacelle cover 23 so as to bring the nacelle interior space 24 into communication with the nacelle exterior space. The first opening 25 may be disposed under a device that is to be transferred by a device lifting mechanism 30 which will be described below. For instance, in FIG. 2, the first opening 25 is disposed under the hydraulic motor 14, which will be described below. The first opening 25 may be configured to be openable and closable by a cover 23a, so that the nacelle interior space 24 can be isolated from the nacelle exterior space to be kept in a substantially airtight state.

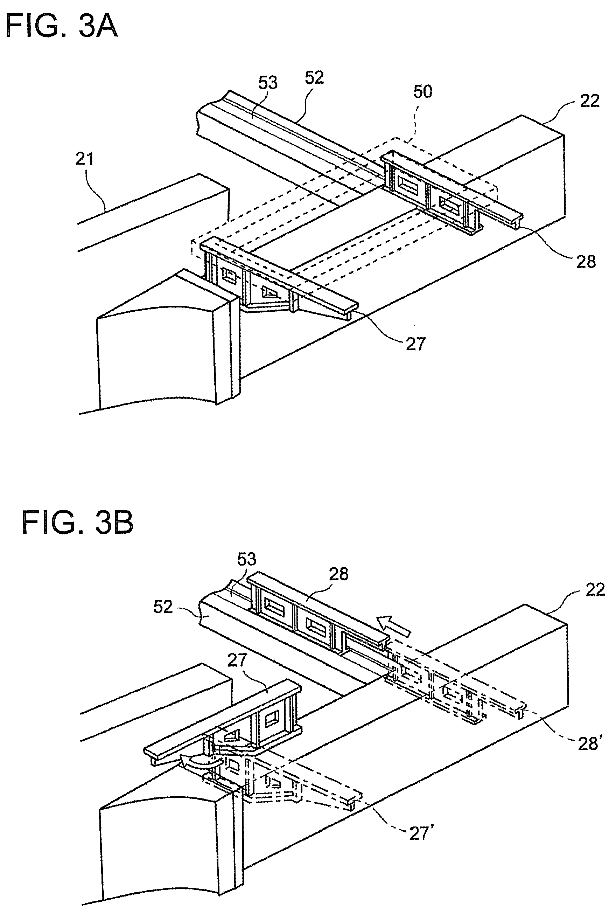

Further, the nacelle base plate 21 includes a second opening 29 on the inner side of the yaw rotation bearing 17 so as to bring the nacelle interior space 24 into communication with the tower interior space 19. There may be at least one second opening 29 disposed on the nacelle base plate 21 at one of the lateral sides of the main shaft 6 of the wind turbine power generating apparatus 1. In some embodiments, there are two second openings 29 disposed on both lateral sides of the main shaft 6 of the wind turbine power generating apparatus 1, respectively. In another embodiment, there is one second opening 29 disposed extending continuously in a direction orthogonal to the axial direction of the main shaft 6 (in the axial orthogonal direction) from one lateral side to the other lateral side across the main shaft 6 of the wind turbine power generating apparatus 1. Here, in the illustrative embodiment of FIG. 3, one second opening 29 extends in the axial orthogonal direction from one lateral side to the other lateral side across the main shaft 6.

A device lifting mechanism 30 for lifting and lowering the first device disposed in the nacelle interior space 24 between the nacelle interior space 24 and the nacelle exterior space via the first opening 25 is disposed in the nacelle interior space 24. In one embodiment, the device lifting mechanism 30 has a first reel 31 disposed in the tower interior space 19, a wire 32 for suspending a device that is to be installed in the nacelle interior space 24, an arm part 33 that serves as a suspending part installed in the nacelle interior space 24, a bracket part 34, and a pulley part 35. The specific configuration of the device lifting mechanism 30 will be described below.

Further, a permanent lifting mechanism 40 may be disposed in the nacelle interior space 24 for the purpose of transferring a device in the nacelle interior space 24. The permanent lifting mechanism 40 has a smaller rated load than that of the device lifting mechanism 30, which will be described below. For example, the permanent lifting mechanism 40 illustrated in FIG. 1 includes a rail 43 disposed on the upper part of the nacelle interior space 24, a second reel 41 configured to be movable in a horizontal plane along the rail 43, and a wire 42 that is wound up or down by the second reel 41. A hook for suspending a device may be attached to the far end of the wire 42. The rail 43, for instance, may be formed by the nacelle frame, which is disposed along the edge of the ceiling of the nacelle 20. Also, in the illustrative embodiment from FIG. 1, the permanent lifting mechanism 40 is illustrated as a lifting device which is permanently installed. The permanent lifting mechanism 40, however, may be a device lifting apparatus that is freely attachable and detachable as long as its rated load is smaller than that of the device lifting mechanism 30. Further, while the illustrative embodiment from FIG. 1 illustrates a permanent lifting mechanism 40 in which the second reel 41 travels along the rail 43, a permanent lifting mechanism 40 of another type may be provided. For instance, a permanent lifting mechanism 40 may be a crane or a winch mounted on the nacelle base plate 21, the nacelle frame, or the like.

Next, in reference to FIGs. 3A and 3B, the supporting frames 27, 28 configured to support the transfer-target first device will be described in detail. FIG. 3A is a perspective view of an exemplary configuration (when a device is disposed thereon) of a supporting frame according to one embodiment. FIG. 3B is a perspective view of an exemplary configuration (when removed) of a supporting frame according to one embodiment. A pair of supporting frames 27, 28 illustrated in FIGs. 3A and 3B are disposed on different positions in the axial direction of the main shaft 6, respectively. Each of the pair of supporting frames 27, 28 is mounted to the nacelle frame 22 to be freely rotatable or slidable and configured to support the hydraulic motor 14 (device baseplate 50) on the nacelle frame 22 side when they are positioned in the first space over the first opening 25. Here, the device baseplate 50 is normally supported on the supporting frames 27, 28 in a state where the hydraulic motor 14 is placed on the device baseplate 50. Further, as illustrated in FIG. 3A, the supporting frames 27, 28 are configured to support the hydraulic motor 14 when they are positioned in the first space over the first opening 25. Each of the supporting frames 27, 28 may be provided in a cantilever fashion so that only one end is attached to the nacelle frame 22. Also, the supporting frames 27, 28 are disposed so that they are substantially perpendicular with respect to the axial direction of the main shaft 6 (i.e., in the width direction of the nacelle 20) in the horizontal plane while being positioned in the first space. Moreover, as illustrated in FIG. 3B, the supporting frames 27, 28 are configured to be capable of receding to the second space which is apart from the first space by moving at least in the horizontal direction from the first space. The second space here is offset at least in the horizontal direction with respect to the first space. For instance, the supporting frame 27 at the front side is capable of receding from the first space to the second space by rotating. In this case, a rotational shaft for rotating the supporting frame 27 may be mounted to the nacelle frame 22. Also, the supporting frame 28 may be slid after or before the rotation of the supporting frame 27, or may carry out two or more actions to recede from the first space to the second space. The supporting frame 28 at the rear side is capable of receding from the first space to the second space by sliding. For instance, in a case where another nacelle frame 52 is disposed extending in a direction the substantially perpendicular to the nacelle frame 22 in the horizontal plane, a groove 53 for guiding the supporting frame 28 to slide thereon may be disposed on the nacelle frame 52. Then, in a state where the supporting frames 27, 28 have receded from the first space to the second space, the arm part 33 transfers the hydraulic motor 14 between the nacelle interior space 24 and the nacelle exterior space via the first space and the first opening 25. As a result, it is possible to suspend and lift or lower the hydraulic motor 14 without causing the transfer-target device such as the hydraulic motor 14 to interfere with the supporting frames 27, 28.

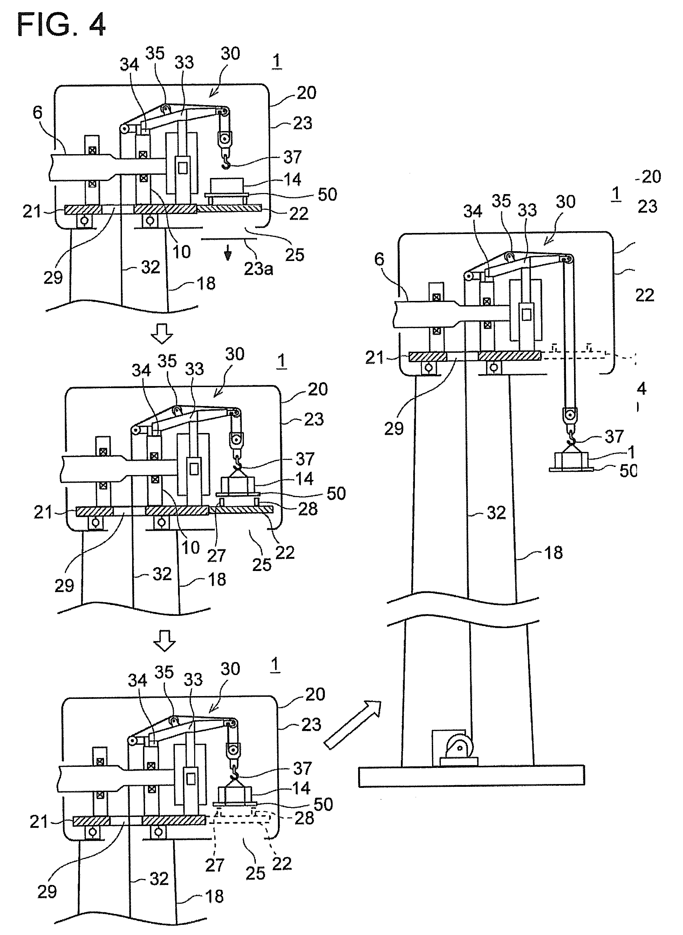

Next, in reference to FIG. 4, the device transferring method of the wind turbine power generating apparatus 1 according to the present embodiment will be described. FIG 4 is a diagram illustrating the device transferring method according to one embodiment. It illustrates a case where the hydraulic motor 14 being the device to be transferred (the first device) is being suspended and lowered.

As illustrated in FIG. 4, firstly in a cover opening step, the cover 23a of the nacelle cover 23 is opened, the cover 23a being disposed under the hydraulic motor 14 being subject to transfer. Subsequently, in a device suspending step, the hydraulic motor 14 is suspended from a hook (part of a suspending part) 37 attached to the wire 32 of the device lifting mechanism 30 so that the first reel 31 is driven to lift the hydraulic motor 14. At this time, the device lifting mechanism 30 may be used to lift the hydraulic motor 14 along with the device baseplate 50, on which the hydraulic motor 14 is placed. Also, when the hydraulic motor 14 is offset in the horizontal direction from the position immediately above the first opening 25, the hydraulic motor 14 may be moved horizontally to the first space over the first opening 25 before the device suspending step. In this case, the permanent lifting mechanism 40 or an actuator such as a hydraulic cylinder may be used, for instance, to move the hydraulic motor 14 horizontally.

Subsequently, in a frame moving step, the supporting frames 27, 28 for supporting the hydraulic motor 14 on the nacelle 20 side are moved while the hydraulic motor 14 is being lifted. By lifting the first device, which is supported by the supporting frames 27, 28, slightly off the frames when moving the supporting frames 27, 28 from the first space to the second space, it becomes easier to move the supporting frames 27, 28 out from under the first device. In the frame moving step, at least movement in the horizontal direction moves the supporting frames 27, 28 from the first space over the first opening 25 to the second space which is apart from the first space. At this time, in the frame moving step, the supporting frames 27, 28 may be moved from the first space to the second space, and vice versa, in the horizontal plane by being slid in the horizontal direction or rotated around an axis which extends along the vertical direction. As a result, it is possible to move the supporting frames 27, 28 in the horizontal plane in a limited space around the hydraulic motor 14 so that the first device can be removed from the first space to the second space, and the removed first device can be returned to the first space from the second space.

Furthermore, in the first device lifting/lowering step and after the cover opening step, while the supporting frames 27, 28 are kept in a state of being removed to the first space, the device lifting mechanism 30 lifts or lowers the hydraulic motor 14 between the nacelle interior space 24 and the nacelle exterior space via the first space and the first opening 25. In this first device lifting/lowering step, the hydraulic motor 14 may be lifted or lowered along with the device baseplate 50, on which the hydraulic motor 14 is placed. By lifting the hydraulic motor 14 along with the device baseplate 50, the device baseplate or the casing protects at least a part of the hydraulic motor 14, making it unlikely for the hydraulic motor 14 to receive the shock caused by the transfer. Further, if the hydraulic motor 14 is lifted or lowered separately from the device baseplate 50, it would be necessary to remove the hydraulic motor 14 from the device baseplate 50 and then move the device baseplate 50 in the horizontal direction to be removed from the first space. Thus, lifting or lowering the hydraulic motor 14 along with the device baseplate 50 makes it possible to reduce the number of steps and thus to further improve the efficiency in the transferring work. Also, in a case where the hydraulic motor 14 is accommodated in a casing such as a sound-proof chamber or a sound-isolation chamber, for instance, the hydraulic motor 14 may be lifted or lowered along with such a casing.

According to the wind turbine power generating apparatus 1 having the above configuration, when the first device (for instance, the hydraulic motor 14) to be transferred is positioned in the vertical line of the first opening 25 in a state where the load of the first device is supported by the device lifting mechanism 30, the cover 23a is opened and the supporting frames 27, 28 are removed to the second space apart from the first space over the first opening by being moved in the horizontal direction. As a result, there is no obstacle in the path for transferring the first device. Thus, the first device only has to be transferred in the vertical direction to be easily suspended and lifted or lowered between the nacelle interior space 24 and the nacelle exterior space via the first opening 25. Accordingly, it is possible to carry out simplified and efficient transferring work when transferring a device disposed in the nacelle interior space 24 between the nacelle interior space 24 and the nacelle exterior space during installation, maintenance, or dismantlement of the wind turbine power generating apparatus 1. While FIG. 4 illustrates a case where the hydraulic motor 14 is suspended and lowered, the steps described herein are executed in the reverse order when suspending and lifting the hydraulic motor 14.

The device transferring method of the above wind turbine power generating apparatus 1 may further include the following steps.

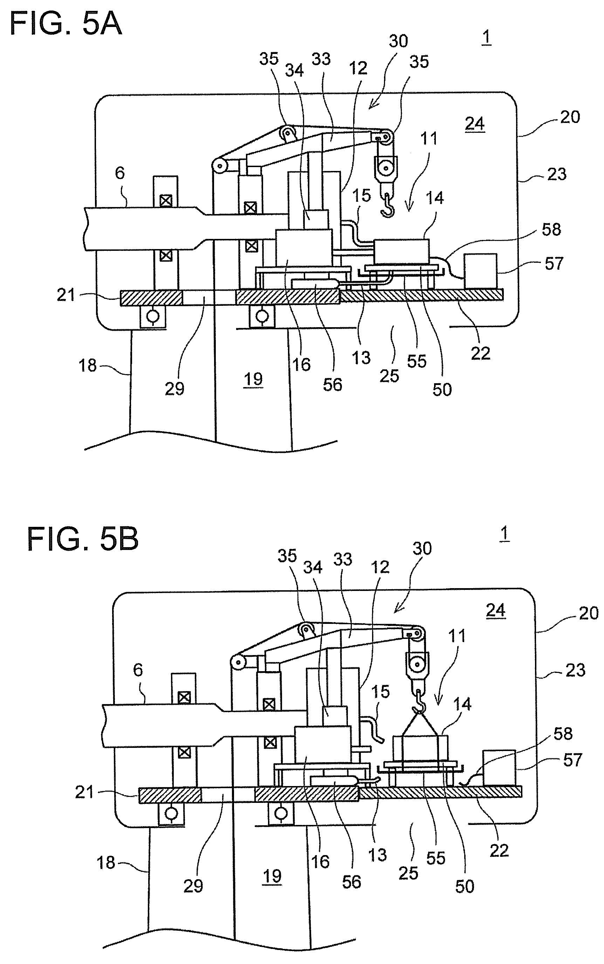

In one embodiment, as illustrated in FIGs. 5A and 5B, the first device lifting/lowering step includes lifting or lowering an oil pan 55 along with the hydraulic motor 14, the oil pan 55 being disposed under the first device.

For instance, the wind turbine power generating apparatus 1 illustrated in FIG. 5A includes an oil pan 55 disposed under the hydraulic motor 14. The oil pan 55 is provided for the purpose of preventing leakage of oil to the outside even when oil leaks from the hydraulic motor 14. For the transfer work, as illustrated in FIG. 5B, the device suspending step includes suspending the oil pan 55 on the suspending part of the device lifting mechanism 30 along with the hydraulic motor 14. Then, in the first device lifting/lowering step (see FIG. 4), the oil pan 55 is lifted or lowered along with the hydraulic motor 14. When lifting or lowering the hydraulic motor 14, it is possible to receive the oil leaking from the first device by the oil pan 55 during the transfer work of the first device. Also, lifting or lowering the hydraulic motor 14 along with the oil pan 55 makes it no longer necessary to remove the oil pan 55. Thus, it is possible to further improve efficiency of the transfer work.

Further, in the wind turbine power generating apparatus 1 illustrated in FIG. 5A, the hydraulic motor 14 is physically connected to other devices. For instance, the hydraulic motor 14 is connected to the generator 16 via the output shaft of the hydraulic motor 14. Also, the hydraulic motor 14 is connected to the hydraulic pump 12 through the high pressure oil line 13 and the low pressure oil line 15. The low pressure oil line 15 includes, for instance, a flexible tube. Further, an accumulator 56 for storing pressure or preventing pulsation may be connected to the high pressure oil line 13. Moreover, the hydraulic motor 14 is connected to the other device 57 through an electric cable 58. The electric cable 58, for instance, may be a cable for supplying electric power to control operation of the valves included in the hydraulic motor 14.

In one embodiment, as illustrated in FIG. 5B, a disconnecting step may be further included before the first device lifting/lowering step. In this disconnecting step, the connection of the piping (the high pressure oil line 13 or the low pressure oil line 15) or the electric cable 58 between the hydraulic motor (the first device) 14 and the other device (the second device) is disconnected. Further, in this disconnecting step, the input shaft connecting the hydraulic motor 14 and the generator 16 and the signal cable for sending and receiving control signals with respect to the hydraulic motor, for instance, are also disconnected in addition to the piping and the electric cable. Then, in a state where the connections of the hydraulic motor 14 to the piping or the electric cables 58 is disconnected, the hydraulic motor 14 is lifted or lowered in the first device lifting/lowered step.

Still further, in a case where another component is disposed under the hydraulic motor 14, the first device lifting/lowering step may include lifting or lowering the first device via the first space and the first opening 25 in a state where the component has been removed to the third space, which is apart from the first space. The third space here is disposed offset from the first space at least in the horizontal direction. In the case where a component is disposed under the hydraulic motor 14 in the first space, there is a risk that the component could be positioned in the path for transferring the hydraulic motor 14, disturbing the suspending and lifting or lowering movement of the hydraulic motor 14. Thus, by removing the component disposed under the hydraulic motor 14 to the third space before lifting or lowering the hydraulic motor 14, there is no obstacle in the path for transferring the hydraulic motor 14, which makes it possible to suspend and lift or lower the hydraulic motor 14 efficiently. The other component may be an oil pan 55. In this case, the oil pan 55 is detached and removed to the third place, which is apart from the first space, before lifting or lowering the hydraulic motor 14.

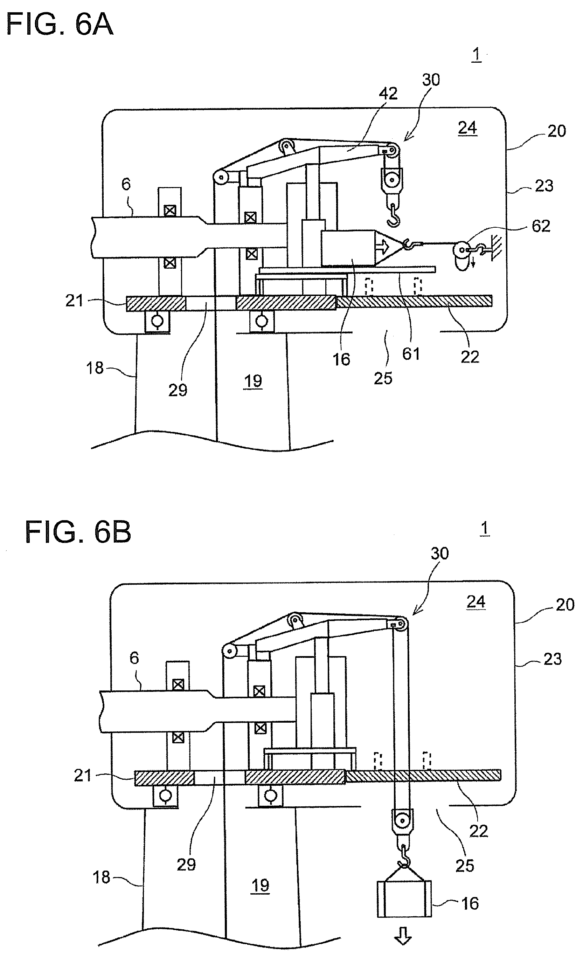

In one embodiment, as illustrated in FIGs. 6A and 6B, the third device provided apart from the hydraulic motor 14 may be lifted or lowered via the first opening 25 when the hydraulic motor 14 is not positioned in the first space over the first opening 25.

A generator 16 will be described now as an example of the third device which is also intended to be transferred. For instance, when the generator 16 is to be transferred from the nacelle interior space 24 to the nacelle exterior space, the hydraulic motor 14 is first suspended and lowered in the first device lifting/lowering step, and then the generator 16 is moved from the third space to the first space by moving the generator 16 at least in the horizontal direction in the third device moving step as illustrated in FIG. 6A. The first space here is a space positioned over the first opening 25. Also, the third space is a space positioned offset from the first space at least in the horizontal direction, and also a position on which the generator 16 is installed in the nacelle interior space 24. For instance, when the generator 16 is moved in the horizontal direction from the third space to the first space, a board 61 for reducing the friction coefficient between the generator 16 and the installation surface of the generator 16 is disposed underneath the generator 16 so as achieve a state where the generator 16 easily slides on the board 61, and then the generator 16 is pulled in the horizontal direction using a chain block 62. Here, besides the chain block 62, another moving mechanism such as a hydraulic jack may be used. As described above, the third device positioned in the third space is moved to the first space over the first opening 25. Then, in the third device lifting/lowering step illustrated in FIG. 6B, the generator 16 is lifted or lowered between the nacelle interior space 24 and the nacelle exterior space via the first space and the first opening 25 in a state where the cover is opened and the supporting frames 27, 28 are removed to the second space. As a result, it is possible to transfer the generator 16 which is apart from the hydraulic motor 14 between the nacelle interior space 24 and the nacelle exterior space via the first opening 25.

In one embodiment, the device transferring method further includes a component transferring step of moving a component between the first space and the third space apart from the first space by moving the component at least in the horizontal direction, the component being disposed under the hydraulic motor 14 in the first space. In the first device lifting/lowering step, the hydraulic motor 14 is lifted or lowered via the first space and the first opening in a state where the component is removed to the third space. In a case where a component is disposed under the hydraulic motor 14 in the first space, there is a risk that the component could be positioned in the path for transferring the hydraulic motor 14, disturbing the suspending and lifting or lowering movement for the hydraulic motor 14. Thus, by removing the component disposed under the hydraulic motor 14 to the third space before lifting or lowering the hydraulic motor 14, there is no obstacle in the path for transferring the hydraulic motor 14, which makes it possible to suspend and lift or lower the hydraulic motor 14 smoothly.

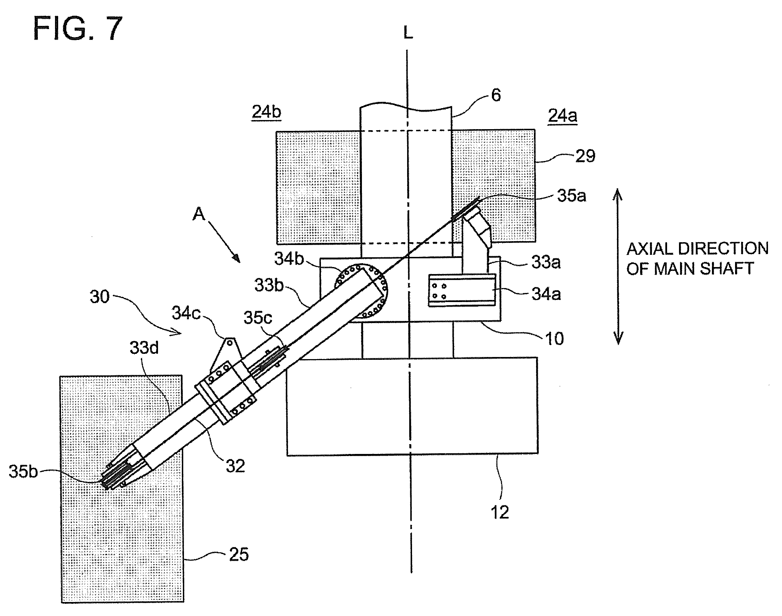

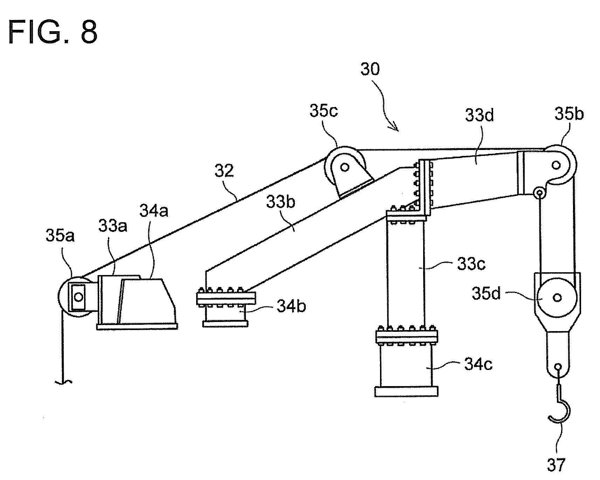

Now, in reference to FIGs. 1, 2, 7 and 8, an example of the device lifting mechanism 30 used for the device transferring method of the present embodiment will be described supplementary. FIG. 7 is a planar view of an exemplary configuration of a device lifting mechanism according to one embodiment. FIG. 8 is a side view of the device lifting mechanism seen from the direction A of FIG. 7.

In one embodiment, the device lifting mechanism 30 includes a first reel 31 disposed in the tower interior space 19, a wire 32 for suspending a device to be installed in the nacelle interior space 24, an arm part 33 serving as a suspending part disposed in the nacelle interior space 24, a bracket part 34 and a pulley part 35.

As illustrated in FIG. 1, the first reel 31 is configured to wind up or down the wire 32. For instance, the first reel 31 includes a rotary drum around which the wire 32 is wound up, and a motor serving as a power source for rotating the rotary drum. This first reel 31 may be disposed anywhere in the tower interior space 19.

The wire 32 extends between the arm part 33 in the nacelle interior space 24 and the first reel 31 in the tower interior space 19 via the second opening 29.

As illustrated in FIGs. 2, 7 and 8, the arm part 33 is configured to support the pulley part 35 on the nacelle 20. Also, the arm part 33 is divided into a plurality of sections so as to be capable of passing through the second opening 29. In FIGs. 2, 7 and 8, for example, the arm part 33 is divided into a first arm 33a that is to be mounted to the housing 10, a second arm 33b to be mounted to the housing 10 adjacently to the first arm 33a, a third arm 33c to be mounted to the torque arm 26, and a fourth arm 33d to be connected to the second arm 33b and the third arm 33c.

The arm part 33 is mounted to the nacelle 20 via the bracket part 34. By providing the bracket part 34, it is possible to configure the arm part 33 to be attachable and detachable with respect to the nacelle 20. In FIGs. 2, 7, and 8, for example, the bracket part 34 includes a first bracket 34a for mounting the first arm 33a to the housing 10, a second bracket 34b for mounting the second arm 33b to the housing 10, and a third bracket 34c for mounting the arm 33c to the torque arm 26. The bracket part 34 may be fixed on the main bearing 10 or the torque arm 26 by bolts, and the arm part 33 may be fixed on the bracket part 34 by bolts via flanges. Here, the fourth arm 33d may be also connected to the second arm 33b and the third arm 33c by bolts via flanges. As described above, supporting each section of the arm part 33 by at least two (three in FIGs. 7 and 8) brackets 33a to 33c enables the device lifting mechanism 30 to stand upright stably in the nacelle interior space 24. Further, the bracket part 34 is mounted to the nacelle base plate 21 directly or indirectly (in FIG. 2, via the main bearing 10 and the torque arm 26), which enables stable transfer of a device even if the device has heavy weight. In another embodiment, the arm part 33 is directly mounted to the nacelle 20 (for instance, the nacelle base plate 21, the torque arm 26 or the nacelle frame 22) without the bracket part 34 being interposed.

The pulley part 35 is supported on the arm part 33 and configured to guide the wire 32. In FIGs. 2, 7, and 8, for example, the pulley part 35 includes a first pulley 35a, a second pulley 35b, and a third pulley 35c, each of which is a fixed pulley supported about an axis on the arm part 33, and a fourth pulley 35d which is a movable pulley supported by the wire 32. The first pulley 35a is disposed above the second opening 29 and configured to pull in the wire 32 into the nacelle interior space 24 from the first reel 31. The first pulley 35a may be supported about an axis on the first arm 33a. The second pulley 35b is positioned over the installation position of the device, i.e., the first opening 25, serving as a suspending point at which the first device (for instance, the hydraulic motor 14) is suspended on the wire 32. The second pulley 35b may be supported about an axis on the fourth arm 33d. The third pulley 35c is disposed between the first pulley 35a and the second pulley 35b. The third pulley 35c may be supported about an axis on the second arm 33b. The fourth pulley 35d is disposed between the second pulley 35b and the hook 37 for suspending the device. With the above described pulley part 35, it is possible to prevent the wire 32 from contacting the nacelle bottom face (surrounding rim of the second opening 29 or the first opening 25) or other devices by means of the first pulley 35a and the second pulley 35b, and also to guide the wire 32 smoothly between the first pulley 35a and the second pulley 35b by means of the third pulley 35c. Furthermore, each of the second pulley (fixed pulley) 35b and the fourth pulley (movable pulley) 35d may be a double pulley which includes two pulleys arranged adjacent to each other, so that the first reel 31 with lower rated load can be employed.

According to the above described device lifting mechanism 30, the arm part 33 is mounted to the nacelle 20 to be freely attachable and detachable by means of the bracket part 34. Thus, it is possible to install the device lifting mechanism 30 in the nacelle interior space 24 when needed during installation, maintenance, dismantlement, or the like of the wind turbine power generating apparatus 1. Accordingly, it is also possible to have the device lifting mechanism 30 removed while the wind turbine power generating apparatus is being operated, which enables effective use of the nacelle interior space 24. Further, the device lifting mechanism 30 includes the first reel 31 disposed in the tower interior space 19 in order to reduce the weight of the nacelle 20, the first reel 31 being provided for lifting and lowering the devices. Also, the wire 32 extends between the arm part 33 in the nacelle interior space 24 and the first reel 31 in the tower interior space 19 via the second opening 29, through which the nacelle interior space 24 communicates with the tower interior space 19. Moreover, the arm part 33 is configured capable of being divided into a plurality of sections (the first arm 33a, second arm 33b, third arm 33c, and fourth arm 33d) so as to be capable of passing through the second opening 29. As a result, it becomes possible to transfer even a long arm part 33 through the second opening 29 by dividing such an arm part 33 into a plurality of sections. Thus, it is possible to transfer each component of the device lifting mechanism 30 between the nacelle interior space 24 and the tower interior space 19 without passing the outside of the wind turbine power generating apparatus 1, which enables attachment or detachment of the device lifting mechanism 30 even in bad weather.

In one embodiment, each section of the arm part 33, the bracket part 34 and the pulley part 35 are configured capable of being transferred into the nacelle interior space 24 from the tower interior space 19 via the second opening 29 by the permanent lifting mechanism 40. As a result, it is possible to suppress the increase in weight and size of the nacelle 20.

In some embodiments, as illustrated in FIG. 7, each component of the device lifting mechanism 30 may be transferred via the first opening 25 disposed on the at least one lateral side of the main shaft 6. As a result, it is possible to prevent each component from interfering with the main shaft 6.

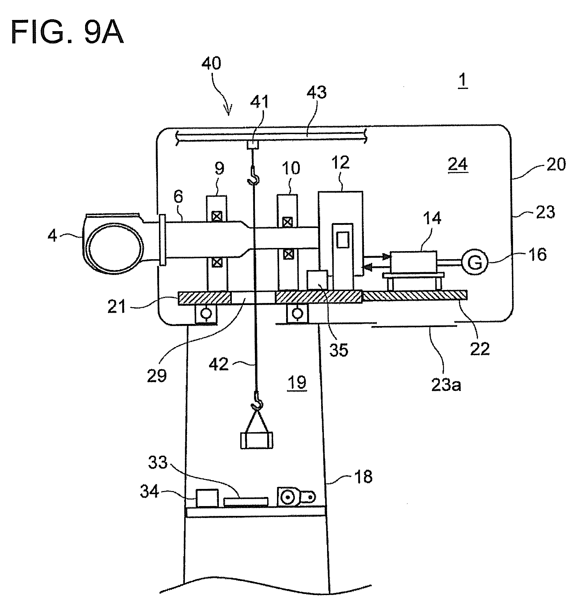

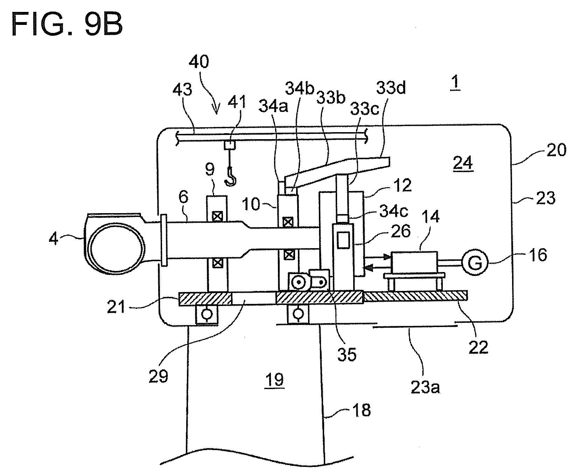

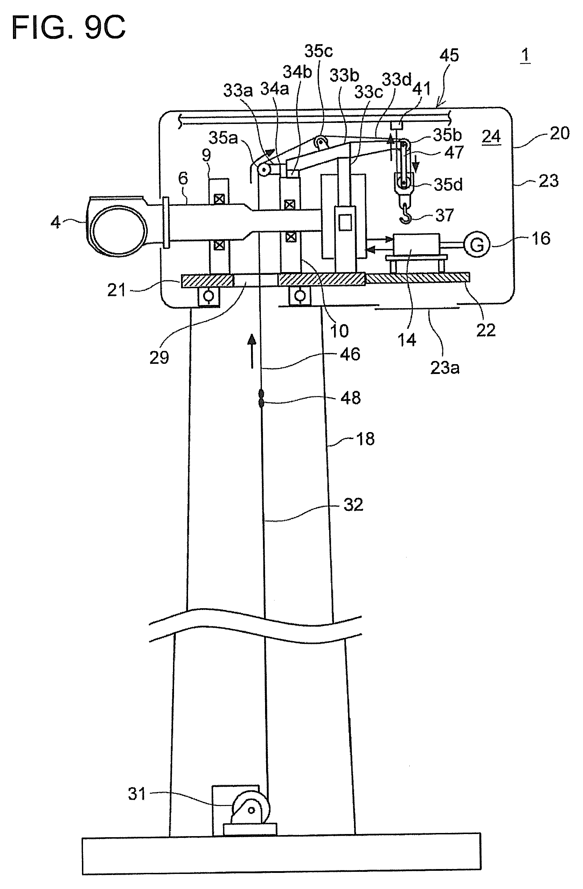

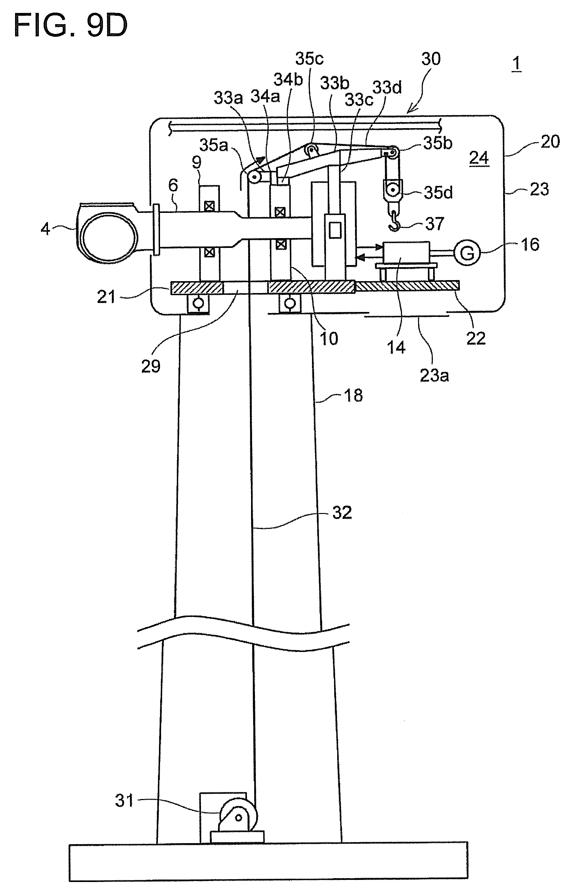

Next, in reference to FIGs. 9A to 9D, the installation method of a device lifting mechanism according to one embodiment will be described. FIG. 9A illustrates a state where each section is being transferred into a nacelle. FIG. 9B illustrates a state where each section is being assembled. FIG. 9C illustrates a state where a wire is being pulled in. FIG. 9D illustrates a state where the device lifting mechanism is installed.

In some embodiments, as illustrated in FIG. 9A, the components each constituting the device lifting mechanism 30 are disposed in the tower interior space 19. Each component is divided into sections to such an extent that they can pass through the second opening 29. For instance, the arm part 33 is divided into the first arm 33a, the second arm 33b, the third arm 33c and the fourth arm 33d. In a transferring step, the permanent lifting mechanism 40 is used to transfer each component to the nacelle interior space 24 from the tower interior space 19 via the second opening 29. The transferred components are temporarily stored in a vacant space in the nacelle interior space 24. Subsequently, in the assembling step illustrated in FIG. 9B, each component having been transferred in the transferring step is mounted to the nacelle 20. For instance, the first arm 33a is fixed on the housing 10 by bolts via the first bracket 34a, the second arm 33b is fixed on the housing 10 by bolts via the second bracket 34b, the third arm 33c is fixed on the torque arm 26 by bolts via the third bracket 34c, and the fourth arm 33d is fixed on the second arm 33b and the third arm 33c by bolts.

Next, in a wire pulling step illustrated in FIG. 9C, the wire 32 is pulled in to the arm part 33 and the pulley part 35 disposed in the nacelle interior space 24 from the first reel 31 disposed in the tower interior space 19 via the second opening 29. In the wire pulling step, a wire pulling mechanism 45 for pulling the wire 32 to the pulley part 35 from the first reel 31 when installing the device lifting mechanism 30 may be used. For instance, the wire pulling mechanism 45 includes a second reel 41 disposed in the nacelle interior space 24, an auxiliary wire 46 connected to an end of the wire 32 and wound up by the second reel 41, and a temporarily fixing member 47 for fixing the fourth pulley (movable pulley) 35d when pulling in the wire 32 by the auxiliary wire 46. The temporarily fixing member 47 fixes the fourth pulley 35d on a fixing section (for instance, the fourth arm 33d). In the exemplary embodiment illustrated in FIG. 9C, the temporarily fixing member 47 is formed by an elongated plate connecting the fourth pulley 35d and the fixing section. Although a reel in the permanent lifting mechanism 40 is used here as the second reel 41, another reel separately provided for pulling in a wire may be used, for instance. The wire pulling mechanism 45 winds up the auxiliary wire 46, to which the wire 32 is connected at a connecting part 48, by the second reel 41 in a state where the fourth pulley 35d is fixed by the temporarily fixing member 47. Once the end of the wire 32 reaches the fixing section (the fourth arm 33d, for instance), the end of the wire 32 is fixed to the fixing section as illustrated in FIG. 9D, and then the temporarily fixing member 47 is removed. As a result, it is possible to pull the wire 32 up in a limited space easily from the first reel 31 disposed in the tower interior space 19 to the fourth pulley 35d disposed in the nacelle interior space 24.

As described above, according to the above embodiments, it is possible to suspend and lift or lower the first device between a nacelle interior space and a nacelle exterior space via the first opening without interfering with supporting frames for supporting the transfer-target first device on a nacelle side during installation, maintenance, dismantlement, or the like of a wind turbine power generating apparatus. As a result, it is possible to carry out simplified and efficient transfer work.

Embodiments of the present invention were described in detail above, but the present invention is not limited thereto, and various amendments and modifications may be implemented within a scope that does not depart from the present invention.

For instance, while FIGs. 1 and 4 illustrate a case where the first device to be transferred is a hydraulic motor 14 as an example, the first device is not limited to a hydraulic motor 14 and may be other devices, such as a generator 16 or housings 9, 10 for the main bearings.

Further, while FIGs. 7, 8, and 9A to 9D illustrate a configuration in which the device lifting mechanism 30 includes an attachable and detachable suspending part (arm part 33, bracket part 34, and pulley part 35) configured to be attachable and detachable with respect to a nacelle 20, the device lifting mechanism 30 may include a suspending part permanently installed in the nacelle 20.

## Claims

1. A device transferring method for a wind turbine power generating apparatus (1) of transferring devices disposed inside a nacelle (20) of the wind turbine power generating apparatus (1) including at least one supporting frame (27, 28) configured to support a first device (14) when being positioned in a first space over a first opening (25) formed on a bottom face of the nacelle (20), the device transferring method being **characterized in that** it comprises:
a device suspending step of suspending the first device (14) on a lifting mechanism (30);
a frame moving step of moving the at least one supporting frame (27, 28) between the first space and a second space which is apart from the first space by moving the at least one supporting frame (27, 28) at least in a horizontal direction;
a cover opening step of opening a cover (23) of the first opening (25); and
after the cover opening step, a first device lifting/lowering step of lifting or lowering the first device (14) between a nacelle interior space (24) and a nacelle exterior space via the first space and the first opening (25) by the lifting mechanism (30) in a state where the at least one supporting frame (27, 28) is removed to the second space.

2. The device transferring method for a wind turbine power generating apparatus (1) according to claim 1,
wherein, in the frame moving step, the at least one supporting frame (27, 28) is moved between the first space and the second space in a horizontal plane by being slid in a horizontal direction or being rotated around an axis which extends along a vertical direction.

3. The device transferring method for a wind turbine power generating apparatus (1) according to claim 1 or 2,
wherein two or more of the supporting frames (27, 28) are each mounted to a nacelle base plate (21) connected to a tower (18) of the wind turbine power generating apparatus or to a nacelle frame (22) coupled to the nacelle base plate (21),
wherein the two or more supporting frames (27, 28) are configured to support the first device (14) in cooperation with each other when being positioned in the first space, and
wherein, in the first device lifting/lowering step, the first device (14) is lifted or lowered via the first space and the first opening (25) in a state where the two or more supporting frames (27, 28) are removed to the second space.

4. The device transferring method for a wind turbine power generating apparatus (1) according to any one of claims 1 to 3, further comprising
a disconnecting step of disconnecting connection of a piping or an electric cable between the first device (14) and a second device which is apart from the first device (14),
wherein, in the first device lifting/lowering step, the first device (14) is transferred in a state where the connection of the piping or the electric cable is disconnected.

5. The device transferring method for a wind turbine power generating apparatus (1) according to any one of claims 1 to 4,
wherein the at least one supporting frame (27, 28) is configured to support the first device (14) along with a device baseplate (50) for placing the first device (14) or a casing for accommodating the first device (14), and
wherein, in the first device lifting/lowering step, the first device (14) is lifted or lowered along with the device baseplate (50) or the casing.

6. The device transferring method for a wind turbine power generating apparatus (1) according to any one of claims 1 to 5,
wherein, in the first device lifting/lowering step, the first device (14) is lifted or lowered along with an oil pan (55) disposed under the first device (14).

7. The device transferring method for a wind turbine power generating apparatus (1) according to any one of claims 1 to 6, further comprising
a component moving step of moving a component which is disposed under the first device (14) in the first space between the first space and a third space which is apart from the first space by moving the component at least in the horizontal direction,
wherein, in the first device lifting/lowering step, the first device (14) is lifted or lowered via the first space and the first opening (25) in a state where the component is removed to the third space.

8. The device transferring method for a wind turbine power generating apparatus (1) according to any one of claims 1 to 7,
wherein the first device (14) is a hydraulic motor (14) which is included in a hydraulic transmission configured to transmit rotation of a rotor (3) of the wind turbine power generating apparatus (1) to a generator (16).

9. The device transferring method for a wind turbine power generating apparatus (1) according to any one of claims 1 to 8, further comprising:
a third device moving step of moving a third device which is apart from the first device (14) between the first space and a space which is apart from the first space, by moving the third device at least in the horizontal direction; and
after the cover opening step, a third-device lifting/lowering step of lifting or lowering the third device between the nacelle interior space (24) and the nacelle exterior space via the first space and the first opening (25) in a state where the at least one supporting frame (27, 28) is removed to the second space and the first device (14) is in the nacelle exterior space.

10. The device transferring method for a wind turbine power generating apparatus (1) according to claim 9,
wherein the third device is a generator (16) disposed in the nacelle (20).

11. The device transferring method for a wind turbine power generating apparatus (1) according to any one of claims 1 to 10,
wherein the lifting mechanism (25) includes a suspending part configured to suspend the first device (14), and a reel (31) for lifting or lowering the first device (14) suspended on the suspending part, and
wherein the device transferring method further comprises, before the device suspending step, a lifting-mechanism assembling step including:
transferring the suspending part having been divided into a plurality of sections into the nacelle (20) via a second opening through which the tower interior space (19) communicates with the nacelle interior space (24); and
assembling the suspending part.

12. The device transferring method for a wind turbine power generating apparatus (1) according to claim 11,
wherein, in the lifting-mechanism assembling step, a wire (32) is pulled in from the reel (31) disposed in the tower (18) of the wind turbine power generating apparatus (1) to the suspending part disposed in the nacelle (20) via the second opening (29).

13. A wind turbine power generating apparatus (1) comprising:
a nacelle (20);
a first device (14) disposed in the nacelle (20);
an attachment part to which a lifting mechanism (25) is attachable, the lifting mechanism (25) being configured to lift and lower the first device (14) in a state where the first device (14) is being suspended;
a first opening (25) formed on a bottom face of the nacelle (20) and configured to be openable and closable by a cover (23); and
at least one supporting frame (27, 28) configured to support the first device (14) on a nacelle side in a state where the at least one supporting frame (27, 28) is positioned in a first space over the first opening (25),
**characterized in that** the at least one supporting frame (27, 28) is configured to be capable of being removed to a second space which is apart from the first space by being moved at least in a horizontal direction from the first space so as not to interfere with the first device (14) configured to be lifted or lowered between a nacelle interior space (24) and a nacelle exterior space by the lifting mechanism (30) via the first space and the first opening (25) in a state where the cover (23) is open.

14. The wind turbine power generating apparatus (1) according to claim 13,
wherein the at least one supporting frame (27, 28) is mounted to a nacelle base plate (21) connected to a tower (18) of the wind turbine power generating apparatus (1) or to a nacelle frame (22) coupled to the nacelle base plate (21), and configured to be movable between the first space and the second space in a horizontal plane by being slid in the horizontal direction or rotated around an axis which extends in the vertical direction.

15. The wind turbine power generating apparatus (1) according to claim 13 or 14,
wherein, the device is a hydraulic motor (14) which is included in a hydraulic transmission configured to transmit rotation of a rotor (3) of the wind turbine power generating apparatus (1) to a generator (16).

## Patentansprüche

1. Vorrichtungstransferierungsverfahren für eine Windturbinen-Elektrizitätserzeugungsmaschine (1) zum Transferieren von Vorrichtungen, die im Inneren einer Gondel (20) der Windturbinen-Elektrizitätserzeugungsmaschine (1) angeordnet sind, die mindestens einen Stützrahmen (27, 28) enthält, der dafür konfiguriert ist, eine erste Vorrichtung (14) zu stützen, wenn sie in einem ersten Raum über einer ersten Öffnung (25) positioniert ist, die in einer Bodenfläche der Gondel (20) ausgebildet ist, wobei das Vorrichtungstransferierungsverfahren **dadurch gekennzeichnet ist, dass** es umfasst:
einen Vorrichtungsaufhängungsschritt zum Aufhängen der ersten Vorrichtung (14) an einem Hebemechanismus (30),
einen Rahmenbewegungsschritt zum Bewegen des mindestens einen Stützrahmens (27, 28) zwischen dem ersten Raum und einem zweiten Raum, der von dem ersten Raum beabstandet ist, durch Bewegen des mindestens einen Stützrahmens (27, 28) mindestens in einer horizontalen Richtung,
einen Abdeckungsöffnungsschritt zum Öffnen einer Abdeckung (23) der ersten Öffnung (25), und
nach dem Abdeckungsöffnungsschritt, einen ersten Vorrichtungsanhebe-/-absenkschritt zum Anheben oder Absenken der ersten Vorrichtung (14) zwischen einem Gondelinnenraum (24) und einem Gondelaußenraum durch den ersten Raum und die erste Öffnung (25) mittels des Hebemechanismus (30) in einem Zustand, in dem der mindestens eine Stützrahmen (27, 28) zu dem zweiten Raum umbewegt wird.

2. Vorrichtungstransferierungsverfahren für eine Windturbinen-Elektrizitätserzeugungsmaschine (1) nach Anspruch 1,
wobei, in dem Rahmenbewegungsschritt, der mindestens eine Stützrahmen (27, 28) zwischen dem ersten Raum und dem zweiten Raum in einer horizontalen Ebene bewegt wird, indem er in einer horizontalen Richtung verschoben wird oder um eine Achse gedreht wird, die sich entlang einer vertikalen Richtung erstreckt.

3. Vorrichtungstransferierungsverfahren für eine Windturbinen-Elektrizitätserzeugungsmaschine (1) nach Anspruch 1 oder 2, wobei zwei oder mehr der Stützrahmen (27, 28) jeweils an einer Gondelgrundplatte (21) montiert sind, die mit einem Mast (18) der Windturbinen-Elektrizitätserzeugungsmaschine verbunden ist, oder an einem Gondelrahmen (22) montiert sind, der mit der Gondelgrundplatte (21) gekoppelt ist,
wobei die zwei oder mehr Stützrahmen (27, 28) dafür konfiguriert sind, die erste Vorrichtung (14) im Zusammenwirken miteinander zu stützen, wenn sie in dem ersten Raum positioniert ist, und
wobei, in dem ersten Vorrichtungsanhebe-/-absenkschritt, die erste Vorrichtung (14) durch den ersten Raum und die erste Öffnung (25) in einem Zustand angehoben oder abgesenkt wird, wo die zwei oder mehr Stützrahmen (27, 28) zu dem zweiten Raum umbewegt werden.

4. Vorrichtungstransferierungsverfahren für eine Windturbinen-Elektrizitätserzeugungsmaschine (1) nach einem der Ansprüche 1 bis 3, ferner umfassend:
einen Trennungsschritt zum Trennen der Verbindung einer Rohrleitung oder eines elektrischen Kabels zwischen der ersten Vorrichtung (14) und einer zweiten Vorrichtung, die von der ersten Vorrichtung (14) getrennt ist,
wobei, in dem ersten Vorrichtungsanhebe-/-absenkschritt, die erste Vorrichtung (14) in einem Zustand transferiert wird, wo die Verbindung der Rohrleitung oder des elektrischen Kabels getrennt ist.

5. Vorrichtungstransferierungsverfahren für eine Windturbinen-Elektrizitätserzeugungsmaschine (1) nach einem der Ansprüche 1 bis 4,
wobei der mindestens eine Stützrahmen (27, 28) dafür konfiguriert ist, die erste Vorrichtung (14) zusammen mit einer Vorrichtungsgrundplatte (50) zum Platzieren der ersten Vorrichtung (14) oder einem Gehäuse zum Unterbringen der ersten Vorrichtung (14) zu stützen, und
wobei, in dem ersten Vorrichtungsanhebe-/-absenkschritt, die erste Vorrichtung (14) zusammen mit der Vorrichtungsgrundplatte (50) oder dem Gehäuse angehoben oder abgesenkt wird.

6. Vorrichtungstransferierungsverfahren für eine Windturbinen-Elektrizitätserzeugungsmaschine (1) nach einem der Ansprüche 1 bis 5,
wobei, in dem ersten Vorrichtungsanhebe-/-absenkschritt, die erste Vorrichtung (14) zusammen mit einer Ölwanne (55) angehoben oder abgesenkt wird, die unter der ersten Vorrichtung (14) angeordnet ist.

7. Vorrichtungstransferierungsverfahren für eine Windturbinen-Elektrizitätserzeugungsmaschine (1) nach einem der Ansprüche 1 bis 6, ferner umfassend:
einen Komponentenbewegungsschritt zum Bewegen einer Komponente, die unter der ersten Vorrichtung (14) in dem ersten Raum angeordnet ist, zwischen dem ersten Raum und einem dritten Raum, der von dem ersten Raum getrennt ist, durch Bewegen der Komponente mindestens in der horizontalen Richtung,
wobei, in dem ersten Vorrichtungsanhebe-/-absenkschritt, die erste Vorrichtung (14) durch den ersten Raum und die erste Öffnung (25) in einem Zustand angehoben oder abgesenkt wird, wo die Komponente zu dem dritten Raum umbewegt wird.

8. Vorrichtungstransferierungsverfahren für eine Windturbinen-Elektrizitätserzeugungsmaschine (1) nach einem der Ansprüche 1 bis 7,
wobei die erste Vorrichtung (14) ein Hydraulikmotor (14) ist, der in einem hydraulischen Getriebe enthalten ist, das dafür konfiguriert ist, eine Rotation eines Rotors (3) der Windturbinen-Elektrizitätserzeugungsmaschine (1) zu einem Generator (16) zu übertragen.

9. Vorrichtungstransferierungsverfahren für eine Windturbinen-Elektrizitätserzeugungsmaschine (1) nach einem der Ansprüche 1 bis 8, ferner umfassend:
einen dritten Vorrichtungsbewegungsschritt zum Bewegen einer dritten Vorrichtung, die von der ersten Vorrichtung (14) getrennt ist, zwischen dem ersten Raum und einem Raum, der von dem ersten Raum getrennt ist, durch Bewegen der dritten Vorrichtung mindestens in der horizontalen Richtung, und
nach dem Abdeckungsöffnungsschritt, einen Dritte-Vorrichtungs-Anhebe-/-absenkschritt zum Anheben oder Absenken der dritten Vorrichtung zwischen dem Gondelinnenraum (24) und dem Gondelaußenraum durch den ersten Raum und die erste Öffnung (25) in einem Zustand, in dem der mindestens eine Stützrahmen (27, 28) zu dem zweiten Raum umbewegt wird und die erste Vorrichtung (14) in dem Gondelaußenraum ist.

10. Vorrichtungstransferierungsverfahren für eine Windturbinen-Elektrizitätserzeugungsmaschine (1) nach Anspruch 9,
wobei die dritte Vorrichtung ein Generator (16) ist, der in der Gondel (20) angeordnet ist.

11. Vorrichtungstransferierungsverfahren für eine Windturbinen-Elektrizitätserzeugungsmaschine (1) nach einem der Ansprüche 1 bis 10,
wobei der Hebemechanismus (25) einen Aufhängungsteil enthält, der dafür konfiguriert ist, die erste Vorrichtung (14) aufzuhängen, und eine Haspel (31) zum Anheben oder Absenken der ersten Vorrichtung (14) enthält, die an dem Aufhängungsteil aufgehängt ist, und
wobei das Vorrichtungstransferierungsverfahren ferner, vor dem Vorrichtungsaufhängungsschritt, einen Hebemechanismus-Montageschritt umfasst, enthaltend:
Transferieren des Aufhängungsteils, der in mehrere Sektionen unterteilt wurde, in die Gondel (20) durch eine zweiten Öffnung, durch die der Mastinnenraum (19) mit dem Gondelinnenraum (24) in Verbindung steht, und
Montieren des Aufhängungsteils.

12. Vorrichtungstransferierungsverfahren für eine Windturbinen-Elektrizitätserzeugungsmaschine (1) nach Anspruch 11,
wobei, in dem Hebemechanismus-Montageschritt, ein Draht (32) von der Haspel (31), die in dem Mast (18) der Windturbinen-Elektrizitätserzeugungsmaschine (1) angeordnet ist, zu dem Aufhängungsteil, der in der Gondel (20) angeordnet ist, durch die zweite Öffnung (29) hereingezogen wird.

13. Windturbinen-Elektrizitätserzeugungsmaschine (1), umfassend:
eine Gondel (20),
eine erste Vorrichtung (14), die in der Gondel (20) angeordnet ist,
einen Befestigungsteil, an dem ein Hebemechanismus (25) angebracht werden kann, wobei der Hebemechanismus (25) dafür konfiguriert ist, die erste Vorrichtung (14) in einem Zustand anzuheben und abzusenken, in dem die erste Vorrichtung (14) aufgehängt ist,
eine erste Öffnung (25), die in einer Bodenfläche der Gondel (20) ausgebildet ist und dafür konfiguriert ist, durch eine Abdeckung (23) geöffnet und verschlossen werden zu können, und
mindestens einen Stützrahmen (27, 28), der dafür konfiguriert ist, die erste Vorrichtung (14) auf einer Gondelseite in einem Zustand zu stützen, in dem der mindestens eine Stützrahmen (27, 28) in einem ersten Raum über der ersten Öffnung (25) positioniert ist,
**dadurch gekennzeichnet, dass** der mindestens eine Stützrahmen (27, 28) dafür konfiguriert ist, zu einem zweiten Raum umbewegt werden zu können, der von dem ersten Raum getrennt ist, indem er mindestens in einer horizontalen Richtung aus dem ersten Raum so bewegt wird, dass er nicht durch die erste Vorrichtung (14) behindert wird, die dafür konfiguriert ist, zwischen einem Gondelinnenraum (24) und einem Gondelaußenraum mittels des Hebemechanismus (30) durch den ersten Raum und die erste Öffnung (25) in einem Zustand angehoben oder abgesenkt zu werden, in dem die Abdeckung (23) offen ist.

14. Windturbinen-Elektrizitätserzeugungsmaschine (1) nach Anspruch 13,
wobei der mindestens eine Stützrahmen (27, 28) an einer Gondelgrundplatte (21) montiert ist, die mit einem Mast (18) der Windturbinen-Elektrizitätserzeugungsmaschine (1) verbunden ist, oder an einem Gondelrahmen (22) montiert ist, der mit der Gondelgrundplatte (21) gekoppelt ist, und dafür konfiguriert ist, zwischen dem ersten Raum und dem zweiten Raum in einer horizontalen Ebene bewegt werden zu können, in dem er in der horizontalen Richtung verschoben wird oder um eine Achse gedreht wird, die sich in der vertikalen Richtung erstreckt.

15. Windturbinen-Elektrizitätserzeugungsmaschine (1) nach Anspruch 13 oder 14, wobei die Vorrichtung ein Hydraulikmotor (14) ist, der in einem hydraulischen Getriebe enthalten ist, das dafür konfiguriert ist, eine Rotation eines Rotors (3) der Windturbinen-Elektrizitätserzeugungsmaschine (1) zu einem Generator (16) zu übertragen.

## Revendications

1. Procédé de transfert de dispositif pour une éolienne (1) destiné à transférer des dispositifs disposés à l'intérieur d'une nacelle (20) de l'éolienne (1) comprenant au moins un bâti de support (27, 28) configuré pour supporter un premier dispositif (14) lorsqu'il est positionné dans un premier espace au-dessus d'une première ouverture (25) formée sur une face inférieure de la nacelle (20), le procédé de transfert de dispositif étant **caractérisé en ce qu'**il comporte :
une étape de suspension de dispositif destinée à suspendre le premier dispositif (14) sur un mécanisme de levage (30) ;
une étape de déplacement de bâti destinée à déplacer le au moins un bâti de support (27, 28) entre le premier espace et un deuxième espace qui est écarté du premier espace en déplaçant le au moins un bâti de support (27, 28) au moins dans une direction horizontale ;
une étape d'ouverture de capot destinée à ouvrir un capot (23) de la première ouverture (25) ; et
après l'étape d'ouverture de capot, une étape de soulèvement/abaissement de premier dispositif destinée à soulever ou abaisser le premier dispositif (14) entre un espace intérieur de nacelle (24) et un espace extérieur de nacelle en passant par le premier espace et la première ouverture (25) grâce au mécanisme de levage (30) dans un état où le au moins un bâti de support (27, 28) est enlevé vers le deuxième espace.

2. Procédé de transfert de dispositif pour une éolienne (1) selon la revendication 1,
selon lequel, dans l'étape de déplacement de bâti, le au moins un bâti de support (27, 28) est déplacé entre le premier espace et le deuxième espace dans un plan horizontal en étant glissé dans une direction horizontale ou étant tourné autour d'un axe qui s'étend le long d'une direction verticale.

3. Procédé de transfert de dispositif pour une éolienne (1) selon la revendication 1 ou 2,
selon lequel deux bâtis de support ou plus (27, 28) sont montés chacun sur une plaque de base de nacelle (21) reliée à une tour (18) de l'éolienne ou à un bâti de nacelle (22) relié à la plaque de base de nacelle (21),
selon lequel les deux bâtis de support ou plus (27, 28) sont configurés pour supporter le premier dispositif (14) en coopération l'un avec l'autre quand il est positionné dans le premier espace, et
selon lequel, dans l'étape de soulèvement/abaissement de premier dispositif, le premier dispositif (14) est soulevé ou abaissé en passant par le premier espace et la première ouverture (25) dans un état où les deux bâtis de support ou plus (27, 28) sont enlevés vers le deuxième espace.

4. Procédé de transfert de dispositif pour une éolienne (1) selon l'une quelconque des revendications 1 à 3, comportant en outre
une étape de déconnexion destinée à défaire la connexion d'une tuyauterie ou d'un câble électrique entre le premier dispositif (14) et un deuxième dispositif qui est à l'écart du premier dispositif (14),
selon lequel, dans l'étape de soulèvement/abaissement de premier dispositif, le premier dispositif (14) est transféré dans un état où la connexion de la tuyauterie ou du câble électrique est défaite.

5. Procédé de transfert de dispositif pour une éolienne (1) selon l'une quelconque des revendications 1 à 4,
selon lequel le au moins un bâti de support (27, 28) est configuré pour supporter le premier dispositif (14) avec une plaque de base de dispositif (50) pour mettre en place le premier dispositif (14) ou un logement destiné à recevoir le premier dispositif (14), et
selon lequel, dans l'étape de soulèvement/abaissement de premier dispositif, le premier dispositif (14) est soulevé ou abaissé avec la plaque de base de dispositif (50) ou le logement.

6. Procédé de transfert de dispositif pour une éolienne (1) selon l'une quelconque des revendications 1 à 5,
selon lequel, dans l'étape de soulèvement/abaissement de premier dispositif, le premier dispositif (14) est soulevé ou abaissé avec un bac à huile (55) disposé sous le premier dispositif (14).

7. Procédé de transfert de dispositif pour une éolienne (1) selon l'une quelconque des revendications 1 à 6, comportant en outre
une étape de déplacement de composant destinée à déplacer un composant qui est disposé sous le premier dispositif (14) dans le premier espace entre le premier espace et un troisième espace qui est à l'écart du premier espace en déplaçant le composant au moins dans la direction horizontale,
selon lequel, dans l'étape de soulèvement/abaissement de premier dispositif, le premier dispositif (14) est soulevé ou abaissé en passant par le premier espace et la première ouverture (25) dans un état où le composant est enlevé vers le troisième espace.

8. Procédé de transfert de dispositif pour une éolienne (1) selon l'une quelconque des revendications 1 à 7,
selon lequel le premier dispositif (14) est un moteur hydraulique (14) qui est inclus dans une transmission hydraulique configurée pour transmettre une rotation d'un rotor (3) de l'éolienne (1) à une génératrice (16).

9. Procédé de transfert de dispositif pour une éolienne (1) selon l'une quelconque des revendications 1 à 8, comportant en outre :
une étape de déplacement de troisième dispositif destinée à déplacer un troisième dispositif qui est à l'écart du premier dispositif (14) entre le premier espace et un espace qui est à l'écart du premier espace, en déplaçant le troisième dispositif au moins dans la direction horizontale ; et
après l'étape d'ouverture de capot, une étape de soulèvement/abaissement de troisième dispositif destinée à soulever ou abaisser le troisième dispositif entre l'espace intérieur de nacelle (24) et l'espace extérieur de nacelle en passant par le premier espace et la première ouverture (25) dans un état où le au moins un bâti de support (27, 28) est enlevé vers le deuxième espace et le premier dispositif (14) est dans l'espace extérieur de nacelle.

10. Procédé de transfert de dispositif pour une éolienne (1) selon la revendication 9,
selon lequel le troisième dispositif est une génératrice (16) disposée dans la nacelle (20).

11. Procédé de transfert de dispositif pour une éolienne (1) selon l'une quelconque des revendications 1 à 10,
selon lequel le mécanisme de levage (25) comprend une partie de suspension configurée pour suspendre le premier dispositif (14), et un treuil (31) pour soulever ou abaisser le premier dispositif (14) suspendu sur la partie de suspension, et
selon lequel le procédé de transfert de dispositif comporte en outre, avant l'étape de suspension de dispositif, une étape d'assemblage de mécanisme de levage comprenant le fait de :
transférer la partie de suspension qui a été divisée en une pluralité de sections dans la nacelle (20) en passant par une deuxième ouverture par l'intermédiaire de laquelle l'espace intérieur de tour (19) communique avec l'espace intérieur de nacelle (24) ; et
assembler la partie de suspension.

12. Procédé de transfert de dispositif pour une éolienne (1) selon la revendication 11,
selon lequel, dans l'étape d'assemblage de mécanisme de levage, un câble (32) est tiré depuis le treuil (31) disposé dans la tour (18) de l'éolienne (1) jusqu'à la partie de suspension disposée dans la nacelle (20) par l'intermédiaire de la deuxième ouverture (29).

13. Eolienne (1) comportant :
une nacelle (20) ;
un premier dispositif (14) disposé dans la nacelle (20) ;
une partie de fixation à laquelle un mécanisme de levage (25) peut être relié, le mécanisme de levage (25) étant configuré pour soulever et abaisser le premier dispositif (14) dans un état où le premier dispositif (14) est suspendu ;
une première ouverture (25) formée sur une face inférieure de la nacelle (20) et configurée pour pouvoir être ouverte et fermée par un capot (23) ; et
au moins un bâti de support (27, 28) configuré pour supporter le premier dispositif (14) sur un côté de nacelle dans un état où le au moins un bâti de support (27, 28) est positionné dans un premier espace au-dessus de la première ouverture (25),
**caractérisée en ce que** le au moins un bâti de support (27, 28) est configuré pour être capable d'être enlevé vers un deuxième espace qui est à l'écart du premier espace en étant déplacé au moins dans une direction horizontale depuis le premier espace de façon à ne pas interférer avec le premier dispositif (14) configuré pour être soulevé ou abaissé entre un espace intérieur de nacelle (24) et un espace extérieur de nacelle par le mécanisme de levage (30) en passant par le premier espace et la première ouverture (25) dans un état où le capot (23) est ouvert.

14. Eolienne (1) selon la revendication 13,
dans laquelle le au moins un bâti de support (27, 28) est monté sur une plaque de base de nacelle (21) reliée à une tour (18) de l'éolienne (1) ou à un bâti de nacelle (22) relié à la plaque de base de nacelle (21), et configuré pour être mobile entre le premier espace et le deuxième espace dans un plan horizontal en étant glissé dans la direction horizontale ou tourné autour d'un axe qui s'étend dans la direction verticale.

15. Eolienne (1) selon la revendication 13 ou 14,
dans laquelle le dispositif est un moteur hydraulique (14) qui est inclus dans une transmission hydraulique configurée pour transmettre une rotation d'un rotor (3) de l'éolienne (1) à une génératrice (16).
